(19) Europäisches Patentamt
European Patent Office
Office européen des brevets

(11) **EP 3 823 576 B1**

(12) **EUROPÄISCHE PATENTSCHRIFT**

(45) Veröffentlichungstag und Bekanntmachung des Hinweises auf die Patenterteilung:
**16.02.2022 Patentblatt 2022/07**

(21) Anmeldenummer: **19745031.5**

(22) Anmeldetag: **16.07.2019**

(51) Internationale Patentklassifikation (IPC):
**A61G 5/02** (2006.01)

(52) Gemeinsame Patentklassifikation (CPC):
**A61G 5/023; A61G 5/026**

(86) Internationale Anmeldenummer:
**PCT/AT2019/060235**

(87) Internationale Veröffentlichungsnummer:
**WO 2020/014720 (23.01.2020 Gazette 2020/04)**

(54) **MECHANISCHER ROLLSTUHLANTRIEB UND ROLLSTUHL MIT EINEM SOLCHEN MECHANISCHEN ROLLSTUHLANTRIEB**

MECHANICAL WHEELCHAIR DRIVE AND WHEELCHAIR HAVING SUCH A MECHANICAL WHEELCHAIR

ENTRAÎNEMENT MÉCANIQUE DE FAUTEUIL ROULANT ET FAUTEUIL ROULANT COMPRENANT UN TEL ENTRAÎNEMENT MÉCANIQUE DE FAUTEUIL ROULANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2018 AT 506092018**

(43) Veröffentlichungstag der Anmeldung:
**26.05.2021 Patentblatt 2021/21**

(73) Patentinhaber: **Technische Universität Wien
1040 Wien (AT)**

(72) Erfinder:
• **GFÖHLER, Margit**
  **1040 Wien (AT)**
• **KURUP, Nithin Babu Rajendra**
  **1040 Wien (AT)**
• **PUCHINGER, Markus**
  **1040 Wien (AT)**

(74) Vertreter: **SONN Patentanwälte OG
Riemergasse 14
1010 Wien (AT)**

(56) Entgegenhaltungen:
DE-U1- 8 803 670    US-B1- 6 910 701

**Beschreibung**

Die Erfindung betrifft einen mechanischen Rollstuhlantrieb mit einem drehbar gelagerten Hebel, einem an dem Hebel befestigten Griff und einer Kraftübertragungseinheit zur Übertragung einer Drehbewegung des Hebels auf ein Rollstuhlrad.

Da der mechanische Rollstuhlantrieb zur Montage an einem Rollstuhl geeignet ist, betrifft die Erfindung des Weiteren einen Rollstuhl mit einer Sitzfläche, einer Rückenlehne, Fußstützen und zumindest zwei Rollstuhlrädern.

Vielfach werden im Alltag eingesetzte Rollstühle von den beeinträchtigten Personen von Hand angetrieben. Zu diesem Zweck weisen die Rollstuhlräder typischerweise entlang ihres Umfangs leicht zu greifende Greifringe auf, mit deren Hilfe das jeweilige Rollstuhlrad direkt durch zug- bzw. stoßartige Bewegungen angetrieben und auch gebremst werden kann.

Auf Grund ihrer Wendigkeit und ihres geringen Gewichts sind mittels Greifring antreibbare Rollstühle vergleichsweise leicht im Alltag einsetzbar und stellen daher für viele Menschen mit Behinderung den bevorzugten Rollstuhltyp dar. Da diese Rollstühle mit Muskelkraft angetrieben werden, wird bei dieser Art der Fortbewegung zugleich auch die körperliche Fitness der beeinträchtigten Personen zumindest im Bereich des Oberkörpers erhalten bzw. verbessert.

Allerdings muss bei der Verwendung von Rollstühlen, die mittels Greifringen angetrieben werden, in Kauf genommen werden, dass der zum Antrieb erforderliche Bewegungsablauf die Gelenke der oberen Extremitäten stark belastet, was bei Personen, die regelmäßig auf die Benutzung eines Rollstuhles angewiesen sind, zu Langzeitschäden, chronischen Schmerzen oder sonstigen Beeinträchtigungen führen kann. Zudem werden durch den sich ständig wiederholenden Bewegungsablauf die Muskelgruppen im Schulter-, Oberarm- und Handgelenksbereich eher einseitig belastet und dadurch zusammenwirkende Muskeln (Agonisten und Antagonisten) ungleichmäßig beansprucht, was ebenfalls zu Beeinträchtigung oder chronischen Schmerzen führen kann. Dadurch kann die Bewegungsfreiheit der Personen, die ohnehin bereits auf einen Rollstuhl angewiesen sind, noch stärker eingeschränkt werden.

Neben diesen den Bewegungsapparat betreffenden Nachteilen hat sich darüber hinaus in Simulationen herausgestellt, dass der Bewegungsablauf zum Antreiben eines Rollstuhles mit Greifringen ineffizient ist, da ein beträchtlicher Teil der muskulären Antriebsleistung nicht auf die Rollstuhlräder übertragen wird.

Aus dem Stand der Technik sind zwar elektrische Rollstuhlantriebe bekannt, die einige der vorstehenden Nachteile vermeiden. Allerdings hängt deren Reichweite primär von der Kapazität der Energiespeicher ab und der elektrische Antrieb bringt nicht nur ein höheres Zusatzgewicht mit sich, sondern wirkt sich auch auf die Größe und damit auch auf die Wendigkeit des Rollstuhles negativ aus.

Daneben sind aus dem Stand der Technik, wie unter anderem aus der DE 3413312 A1, sogenannte Handhebelrollstühle bekannt, bei denen der Antrieb des Rollstuhles mittels eines verschwenkbaren Hebels erfolgt. Dabei werden zum Antrieb des Rollstuhls zwei im Wesentlichen senkrecht angeordnete Hebel nach vorne gedrückt bzw. verschwenkt und das erzeugte Drehmoment auf die Rollstuhlräder übertragen. Zum Rückstellen des Hebels ist dieser durch einen Freilaufmechanismus freigegeben.

Zwar ist diese Art des Antriebs für die Zurücklegung von weiten Strecken durchaus geeignet, jedoch ist die Wendigkeit auf Grund der Anordnung der Hebel eingeschränkt. Darüber hinaus muss der Hebel nach jeder Verschwenkung zurückgestellt werden, was keine kontinuierliche Antriebsbewegung erlaubt und die Handhabung erschwert. Weiters ist der zum Vortrieb nutzbare Winkelbereich des Hebels begrenzt, was sich in Kombination mit der erforderlichen Hebelrückstellung einschränkend auf die erreichbare Geschwindigkeit auswirkt.

Aus dem Sportbereich sind des Weiteren Rennrollstühle mit einem zusätzlichen Vorderrad bekannt, welches mit einer Handkurbel und einer Kette angetrieben wird. Allerdings sind diese Rennrollstühle wegen des zusätzlichen Vorderrades und der damit einhergehenden reduzierten Wendigkeit nicht alltagstauglich.

Darüber hinaus sind aus dem Stand der Technik Rollstühle mit Kurbelantrieben bekannt. Unter anderem zeigen die US 4,758,013 A, US 6,910,701 B1, WO 2004/110329 A1 und US 5,037,120 A solche Rollstühle, bei denen die Drehbewegung einer Kurbel mit Hilfe einer Kette auf das Rollstuhlrad übertragen wird. Nachteiligerweise ist der Kurbelantrieb nicht an die Körpergröße der antreibenden Person anpassbar.

Die WO 2014/199110 A1 offenbart ebenfalls einen Kurbelantrieb für einen Rollstuhl, welcher direkt im Mittelpunkt des Rollstuhlrades befestigbar ist und darüber hinaus über eine Gangschaltung verfügt. Der Hebel ist längenveränderbar, sodass der Benutzer in Kombination mit den unterschiedlichen Gängen die für ihn passende Einstellung finden kann. Nachteilig ist jedoch, dass durch die vergleichsweise tiefe Anordnung des Hebels nur wenig Muskelleistung auf die Rollstuhlräder übertragen werden kann und die Gelenke der oberen Extremitäten stark belastet werden.

Ein weiterer Rollstuhl ist aus DE 88 03 670 U1 bekannt.

Der Erfindung liegt somit die Aufgabe zugrunde, zumindest einzelne Nachteile des Standes der Technik zu reduzieren bzw. zur Gänze zu beseitigen. Die Erfindung setzt sich daher insbesondere zum Ziel, einen alltagstauglichen mechanischen Rollstuhlantrieb bzw. einen damit ausgestatteten Rollstuhl zu schaffen, der das Risiko von Langzeitschäden für Gelenke und Muskeln bei gleichzeitiger Erhöhung der Fortbewegungseffizienz minimiert. Die Erfindung ist in Anspruch 1 definiert.

Die gestellte Aufgabe wird dabei dadurch gelöst, dass der Hebel längenveränderbar und entlang einer in sich geschlossenen und von der Kreisform abweichenden Führung einer Führungsplatte führbar ist, sodass eine Längenveränderung des Hebels während der Drehbewegung stattfindet. Dadurch wird bei dem erfindungsgemäßen Rollstuhlantrieb eine kontinuierliche, von der Kreisform abweichende und zugleich geführte Drehbewegung ermöglicht und auf das Rollstuhlrad übertragen, wodurch die Muskeln und Gelenke einer antreibenden Person weitgehend geschont werden und ein kontinuierlicher, d.h. im Wesentlichen ruckelfreier, Antrieb des Rollstuhls erfolgt. Der Erfindung liegt dabei die Erkenntnis zugrunde, dass eine von der Kreisform abweichende Führung des längenveränderbaren Hebels während der Drehbewegung eine im Vergleich zum Stand der Technik gleichmäßigere Beanspruchung sowohl der als Agonisten als auch der als Antagonisten wirkenden Muskeln der oberen Extremitäten bewirkt und die Gelenke weniger stark auslenkt. Insbesondere ist es durch die von der Kreisform abweichende Führung möglich, die beteiligten Muskeln und Gelenke nur innerhalb von Bereichen zu belasten und auszulenken, innerhalb deren keine (Langzeit-)Schäden auftreten. Vorzugsweise ist die Führung der Führungsplatte daher derart an die Gelenke einer Person angepasst, dass die Gelenke während der Drehbewegung möglichst gering ausgelenkt werden. Zu diesem Zweck kann die Führung derart ausgestaltet sein, dass der Hebel im Gebrauchszustand des Rollstuhlantriebs in einer im Wesentlichen parallelen Stellung zu einer Rückenlehne des Rollstuhls eine kürzere Länge aufweist als in einer Stellung im Wesentlichen senkrecht zur Rückenlehne des Rollstuhls. Für eine kontinuierliche Drehbewegung weist die Führung insbesondere keine Unstetigkeitsstellen auf. Um die Längenveränderbarkeit des Hebels zu ermöglichen, kann dieser teleskopartig ausgebildet sein oder zumindest zwei ineinander verschiebbare Schienenelemente aufweisen. Damit der Hebel während der Drehbewegung durch die Führung der Führungsplatte geführt werden kann, ist die Führung vorzugsweise als in sich geschlossene Kulissenführung ausgebildet, durch welche ein an dem Hebel befestigter Führungsstift geführt wird. Alternativ kann die Führung auch als in sich geschlossene Führungsschiene ausgebildet sein, durch welche ein an dem Hebel befestigter Führungsschlitten oder Haken geführt wird. Es versteht sich von selbst, dass der Führungsstift, der Führungsschlitten oder der Haken zur besseren Führung durch zusätzliche Lagerungsmittel gelagert sein können. "In sich geschlossen" bedeutet in diesem Zusammenhang, dass die Führung keinen Anfang und auch kein Ende aufweist und dadurch eine geschlossene Drehbewegung ermöglicht. Um während der Drehbewegung eine Änderung der Handstellung zu ermöglichen, ohne dabei den Griff freigeben zu müssen, ist der Griff an dem Hebel vorzugsweise drehbar befestigt. Die Führungsplatte ist im Gebrauchszustand des Rollstuhlantriebs im Wesentlichen senkrecht zu einer Sitzfläche des Rollstuhls angeordnet.

Um eine kompakte Ausführung des Rollstuhlantriebs zu ermöglichen, ist in einer bevorzugten Ausführungsform vorgesehen, dass der Hebel einen in einem Befestigungspunkt der Führungsplatte drehbar gelagerten Hebelteil und einen entlang der Führung geführten, ausziehbaren Hebelteil aufweist. Vorzugsweise ist der drehbar gelagerte Hebelteil in dem Befestigungspunkt über ein Kugellager oder ein Drehgelenk mit der Führungsplatte verbunden. Der drehbare bzw. der ausziehbare Hebelteil können insbesondere teleskop- oder schienenartig ineinander geschoben werden. Bevorzugt wird hierbei zur Minimierung der Reibung eine Linearführung mit Kugelumlauflagerung verwendet. Der Griff ist vorzugsweise an dem ausziehbaren Hebelteil befestigt.

Damit der Rollstuhlantrieb an die jeweilige Körpergröße der antreibenden Person angepasst werden kann, ist es günstig, wenn eine horizontale Justiereinrichtung zur verstellbaren Befestigung der Führungsplatte und des Hebels entlang einer Horizontalen vorgesehen ist. Dadurch ist es möglich, die Führungsplatte und den Hebel im Gebrauchszustand horizontal an verschiedenen Stellen zu befestigen. Eine Horizontale ist dabei eine im Gebrauchszustand des Rollstuhlantriebs zu einer Bodenfläche im Wesentlichen parallel verlaufende und in Fahrtrichtung des Rollstuhls weisende gedachte Linie. Die Befestigung kann dabei mit Hilfe von Befestigungsmitteln, wie beispielsweise Befestigungsstifte, Klammern oder Rasthaken, an dafür vorgesehenen Stellen erfolgen.

In einer bevorzugten Ausführungsform ist zudem eine vertikale Justiereinrichtung zur verstellbaren Befestigung der Führungsplatte und des Hebels entlang einer Vertikalen vorgesehen. Dadurch ist es möglich, die Führungsplatte und den Hebel im Gebrauchszustand vertikal an verschiedenen Stellen zu befestigen. Eine Vertikale ist dabei eine im Gebrauchszustand des Rollstuhlantriebs zu einer Bodenfläche im Wesentlichen senkrecht angeordnete gedachte Linie. Die Befestigung kann dabei mit Hilfe von Befestigungsmitteln, wie beispielsweise Befestigungsstifte, Klammern oder Rasthaken, an dafür vorgesehenen Stellen erfolgen.

Um die horizontale und/oder die vertikale Justiereinrichtung rasch und individuell einstellen zu können, ist es vorteilhaft, wenn die Justiereinrichtung eine Schiene mit Befestigungslöchern und einen entlang der Schiene gleitenden Schlitten mit einem Fixierstift aufweist, wobei der Fixierstift zur Fixierung des Schlittens in die Befestigungslöcher einführbar ist und die Führungsplatte und der Hebel mittelbar oder unmittelbar mit dem Schlitten verbunden sind. Dabei ist in einer besonders bevorzugten Ausführungsform vorgesehen, dass jeweils die vertikale und die horizontale Justiereinrichtung eine Schiene und einen Schlitten aufweisen und die vertikale Justiereinrichtung, insbesondere deren Schiene samt deren Schlitten, auf dem Schlitten der horizontalen Justiereinrichtung befestigt ist und die Führungsplatte und der Hebel auf dem Schlitten der vertikalen Justiereinrichtung befestigt ist. Dadurch ist im Gebrauchszustand des Rollstuhlantriebs eine Verstellbarkeit des Rollstuhlantriebs in einer Ebene senkrecht zu einer Bodenfläche gegeben. In dieser besonders bevorzugten Ausführungsform sind die Führungsplatte und der Hebel unmittelbar mit dem Schlitten der vertikalen Justiereinrichtung und mittelbar über den Schlitten und die Schiene der vertikalen Justiereinrichtung mit dem Schlitten der horizontalen Justiereinrichtung verbunden. Es ist auch denkbar, die Rollen der vertikalen und horizontalen Justiereinrichtung zu vertauschen, sodass die horizontale Justiereinrichtung, insbesondere deren Schiene samt deren Schlitten, auf dem Schlitten der vertikalen Justiereinrichtung befestigt ist und die Führungsplatte und der Hebel auf dem Schlitten der horizontalen Justiereinrichtung befestigt ist.

Um ein Rollstuhlrad auf besonders einfache Weise anzutreiben, ist in einer bevorzugten Ausführungsform vorgesehen, dass die Kraftübertragungseinheit durch einen Riemenantrieb gebildet wird. Dadurch kann auf ein kompliziertes und fehleranfälliges Getriebe mit Zahnrädern verzichtet und Verschleißteile einfach ausgetauscht werden.

Um die Baugröße des Rollstuhlantriebs gering zu halten, ist es günstig, wenn ein Riemen die Drehbewegung des Hebels über eine erste Rolle, insbesondere ein erstes Zahnriemenrad, aufnimmt und an eine zweite Rolle, insbesondere ein zweites Zahnriemenrad, zur Übertragung der Drehbewegung an ein Rollstuhlrad abgibt. Vorzugsweise wird der Riemen dabei durch ein in sich geschlossenes Band mit einer profilierten Innenseite, vorzugsweise einem Zahnriemen, gebildet. Die erste Rolle kann insbesondere direkt mit dem Hebel verdrehsicher verbunden sein und so die Drehbewegung des Hebels auf den Riemen übertragen. Die zweite Rolle ist ebenfalls mit dem Riemen verbunden und zur Übertragung der Drehbewegung an ein Rollstuhlrad eingerichtet, wobei die Kraftübertragung an das Rollstuhlrad vorzugsweise über einen Riementrieb mit Spannvorrichtung erfolgt. Bei der Übertragung der Drehbewegung des Hebels auf das Rollstuhlrad kann bei der ersten und/ oder der zweiten Rolle zusätzlich eine Übersetzung vorgesehen sein. Beispielsweise kann die zweite Rolle verdrehsicher mit einer Übersetzungsrolle verbunden sein, welche einen anderen Durchmesser aufweist und so den Riemen übersetzend mit dem Riementrieb bzw. direkt mit dem Rollstuhlrad verbindet, wobei der Riementrieb bzw. das Rollstuhlrad mit der Übersetzungsrolle in Kontakt ist.

Um einen möglichst kompakten Rollstuhlantrieb zu schaffen, sind in einer besonders bevorzugten Ausführungsform Umlenkrollen vorgesehen, sodass der Riemen im Wesentlichen entlang einer Außenseite des Rollstuhlantriebs, insbesondere entlang der Schienen, führbar ist. Diese Umlenkrollen sind, sofern Justiereinrichtungen vorhanden sind, insbesondere an den Schlitten angebracht.

Um insbesondere bei Bergabfahrten des Rollstuhls Verletzungen zu vermeiden, ist es günstig, wenn die Kraftübertragungseinheit einen vorzugsweise deaktivierbaren Freilaufmechanismus zur Übertragung der Drehbewegung des Hebels in nur eine Drehrichtung aufweist. Vorteilhafterweise entspricht die übertragene Drehrichtung des Hebels der Vorwärtsdrehrichtung des Rollstuhlrades im Gebrauchszustand. Durch den Freilaufmechanismus wird insbesondere bei geneigten Bodenflächen die Sicherheit erhöht, da in diesem Fall die Rotation des Rollstuhlrades nicht auf die Rotation des Hebels übertragen wird.

Um insbesondere bei Verwendung eines Freilaufmechanismus dennoch ein sicheres Bremsen des Rollstuhles zu ermöglichen, ist es vorteilhaft, wenn an dem Griff ein Betätigungshebel für eine Bremsvorrichtung des Rollstuhlrades vorgesehen ist. Der Betätigungshebel kann wiederum über einen Seilzug, einen Bowdenzug oder eine Hydraulikleitung mit einer Bremsvorrichtung des Rollstuhlrades verbunden sein. Die Bremsvorrichtung kann dabei beispielsweise eine Scheiben- oder Trommelbremse aufweisen.

Um bestehende Rollstühle mit dem erfindungsgemäßen Rollstuhlantrieb nachzurüsten, kann zumindest eine Befestigungsvorrichtung zur Befestigung an einem Rollstuhl, insbesondere an einer Armlehnenhalterung eines Rollstuhls, vorgesehen sein. Demnach kann der erfindungsgemäße Rollstuhlantrieb an Stelle einer Armlehne eines Rollstuhles befestigt werden.

Mit dem erfindungsgemäßen Rollstuhlantrieb werden insbesondere die zur Durchführung der Drehbewegung benötigten Gelenke und Muskeln der oberen Extremitäten geschont und die von den Muskeln erzeugte und auf die Rollstuhlräder übertragene Leistung optimiert bzw. erhöht. Um die Muskeln und Gelenke nur in jenen Bereichen, d.h. Streckungs- und Beugungswinkel, anzusprechen, die bei regelmäßiger Verwendung des Rollstuhlantriebs keine (dauerhaften) Schäden oder Schmerzen hervorrufen, ist es günstig, wenn die Führung einer im Wesentlichen tropfenförmigen geschlossenen Kurve mit einem breiten und einem schmalen Endkurvenbereich entspricht, wobei die Endkurvenbereiche jeweils einen Scheitelpunkt aufweisen und der schmale Endkurvenbereich der geschlossenen Kurve im montierten Zustand des Rollstuhlantriebs in Richtung einer Rückenlehne des Rollstuhles zeigt. Diese Kurvenform stellt das Ergebnis einer Optimierungsaufgabe dar, bei der die von der Muskulatur auf das Rollstuhlrad übertragene Leistung unter Reduzierung der Gelenksauslenkung maximiert wurde. Die Endkurvenbereiche können dabei durch Kreisbögen angenähert werden. Der schmale Endkurvenbereich der Kurve weist erfindungsgemäß einen kleineren angenäherten Kurvenradius auf als der breite Endkurvenbereich.

Eine besonders effiziente Kurvenform hinsichtlich der Kraftübertragung und der Gelenksschonung ergibt sich, wenn im montierten Zustand des Rollstuhlantriebs eine zwischen den Scheitelpunkten des breiten und des schmalen Endkurvenbereichs verlaufende Längsachse zumindest 5°, bevorzugt zumindest 10°, vorzugsweise im Wesentlichen 15°, aber nicht mehr als 30°, zur Horizontalen, insbesondere mit dem breiten Endkurvenbereich nach unten, geneigt ist. Im Gebrauchszustand ist daher der breite Endkurvenbereich vorzugsweise zu einer Bodenfläche hin geneigt.

Eine besonders günstige Ausführungsform ergibt sich, wenn die Kurve im Wesentlichen durch folgende mathematische Gleichungen beschreibbar ist:

$$X_1 = A\cos(\theta)$$

$$Y_1 = B\sin(\theta)\sin^n(0{,}5 * \theta)$$

$$\begin{pmatrix} X \\ Y \end{pmatrix} = \begin{pmatrix} \cos(\beta) & -\sin(\beta) \\ \sin(\beta) & \cos(\beta) \end{pmatrix} \begin{pmatrix} X_1 \\ Y_1 \end{pmatrix}$$

, wobei $\theta$ als Laufkoordinate einem Winkel entspricht, die Koordinaten X und Y den Verlauf der Führung in einem kartesischen Koordinatensystem beschreiben, der Parameter $\beta$ zwischen -20° und 30°, die Parameter A und B zwischen 0,01 m und 0,25 m und der Parameter n zwischen 0,2 und 0,9 festgelegt werden. Die Laufkoordinate $\theta$ weist vorzugsweise Werte zwischen 0 und $2*\pi$ bzw. zwischen 0° und 360° auf. Die durch die angegebenen Gleichungen beschriebene Kurve entspricht im Wesentlichen einem besonders günstigen Verlauf der Führung. Dieser kann, je nach Betrachtungsweise, auch gespiegelt sein. Die tatsächliche Orientierung der durch die Kurve beschriebene Führung ist im montierten Zustand des Rollstuhlantriebs aber dergestalt, dass der schmale Endkurvenbereich in Richtung einer Rückenlehne des Rollstuhles zeigt und die Längsachse vorzugsweise mit dem breiten Endkurvenbereich nach unten, d.h. zu einer Bodenfläche hin, geneigt ist. Der Verlauf der Führung kann zweckmäßigerweise geringfügig von der durch die obigen Gleichungen beschriebenen Kurve abweichen, um beispielsweise Unstetigkeiten zu glätten. Insbesondere in dem schmalen Endkurvenbereich ist es für die Drehbewegung des Hebels günstig, wenn die Kurve bzw. die Führung abgeflacht ist.

Die eingangs gestellte Aufgabe wird zudem durch einen Rollstuhl gelöst, bei dem ein mechanischer Rollstuhlantrieb vorgesehen ist, der mit zumindest einem Rollstuhlrad verbunden ist und bei dem der Rollstuhlantrieb gemäß obiger Beschreibung ausgebildet ist.

In einer bevorzugten Ausführungsform ist vorgesehen, dass an dem Rollstuhl zwei Rollstuhlräder vorgesehen sind, die mit jeweils einem Rollstuhlantrieb verbunden sind.

Die Erfindung wird nachstehend anhand von bevorzugten Ausführungsformen weiter erläutert. Darin zeigen:

Fig. 1    einen erfindungsgemäßen Rollstuhlantrieb in einer Schrägansicht;

Fig. 2    eine Führungsplatte samt Führung und einen längenveränderbaren Hebel in seitlicher Ansicht;

Fig. 3    eine besonders bevorzugte Ausführungsform einer Kurve, durch welche die Führung beschrieben werden kann;

Fig. 4    einen Rollstuhl mit einem erfindungsgemäßen Rollstuhlantrieb; und

Fig. 5    einen Rollstuhl mit einem erfindungsgemäßen Rollstuhlantrieb in Explosionsdarstellung.

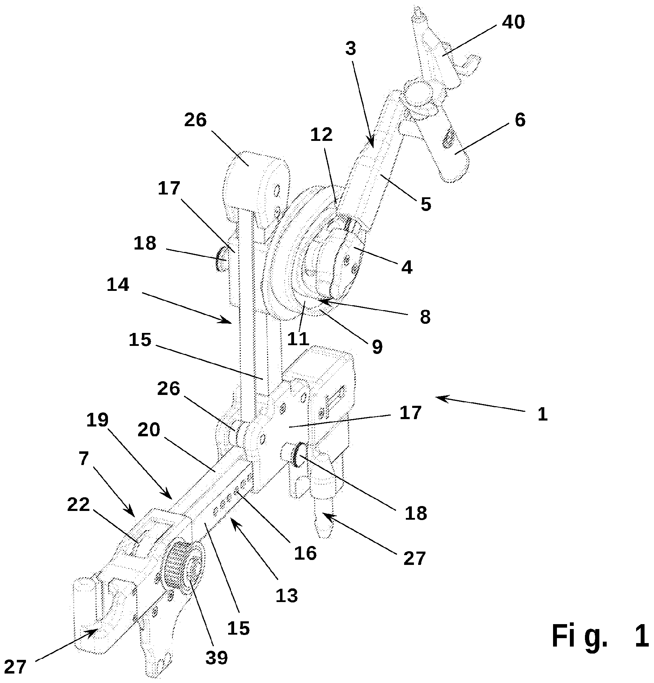

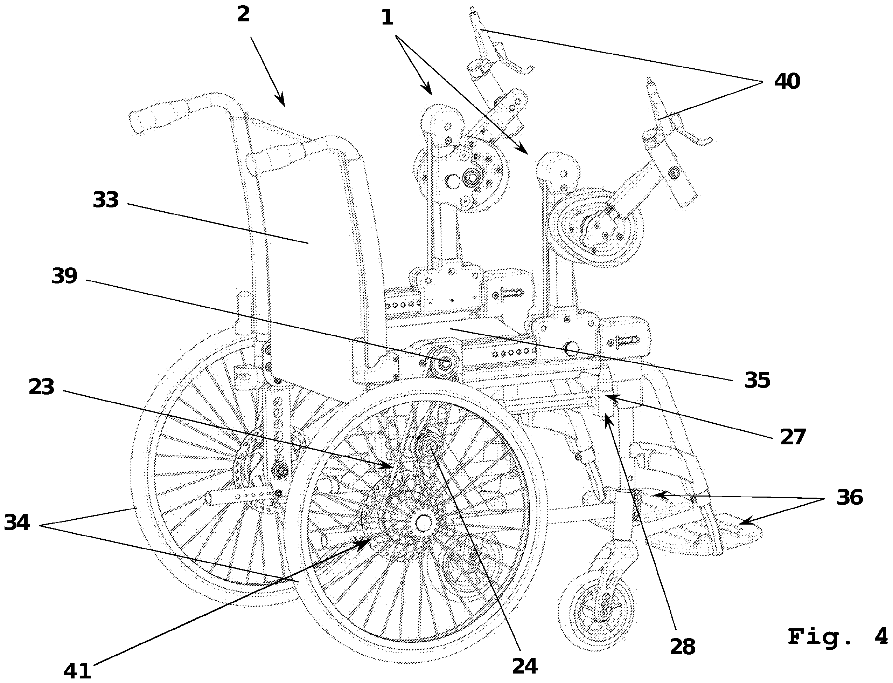

In Fig. 1 ist ein mechanischer Rollstuhlantrieb 1 für einen Rollstuhl 2 in einer bevorzugten Ausführungsform dargestellt. Der Rollstuhlantrieb 1 weist einen längenveränderbaren Hebel 3 auf, der aus einem drehbar gelagerten Hebelteil 4 und einem ausziehbaren Hebelteil 5 besteht, an welchen wiederum ein vorzugsweise drehbarer Griff 6 befestigt ist. Mittels einer Kraftübertragungseinheit 7 kann die Drehbewegung des Hebels 3 auf ein Rollstuhlrad 34 (nicht gezeigt) übertragen werden. Um den Rollstuhl zu bremsen, kann der Griff 6 einen Betätigungshebel 40 für eine Bremsvorrichtung 41 des Rollstuhlrades 34 aufweisen (vgl. Fig. 4). Der Betätigungshebel 40 kann dabei beispielsweise über einen Seilzug (nicht gezeigt) mit der Bremsvorrichtung 41 verbunden sein.

Um während der Drehbewegung eine Längenveränderung des Hebels 3 zu bewerkstelligen, ist der drehbar gelagerte Hebelteil 4 in einem Befestigungspunkt 10 einer Führungsplatte 9 drehbar gelagert und der ausziehbare Hebelteil 5 in einer in sich geschlossenen Führung 8 der Führungsplatte 9 geführt. Vorzugsweise wird die Führung 8 durch eine Kulissenführung 11 gebildet, in welcher ein am ausziehbaren Hebelteil 5 befestigter Führungsstift 12 gleitet. Alternativ kann die Führung 8 auch als in sich geschlossene Führungsschiene ausgebildet sein, an welcher ein an dem ausziehbaren Hebelteil 5 befestigter Führungsschlitten oder Haken entlanggleitet. Der der Führungsstift 12, der Führungsschlitten oder der Haken können zur besseren Führung durch zusätzliche Lagerungsmittel gelagert sein.

Um den Rollstuhlantrieb 1 an den jeweiligen Benutzer anpassen zu können, sind vorzugsweise eine horizontale Justiereinrichtung 13 und eine vertikale Justiereinrichtung 14 vorgesehen. Durch die horizontale Justiereinrichtung 13 kann die Führungsplatte 9 und der Hebel 3 entlang einer Horizontalen, d.h. im Gebrauchszustand im Wesentlichen in Fahrtrichtung des Rollstuhls, an verschiedenen Stellen befestigt werden. Durch die vertikale Justiereinrichtung 14 kann die Führungsplatte 9 und der Hebel 3 entlang einer Vertikalen, d.h. im Gebrauchszustand im Wesentlichen im rechten Winkel zu einer Bodenfläche, an verschiedenen Stellen befestigt werden. In der gezeigten Ausführungsform weisen die Justiereinrichtungen 13, 14 jeweils Schienen 15 mit Befestigungslöchern 16 und Schlitten 17 mit Befestigungsstiften 18 auf. Zudem ist die Schiene 15 der vertikalen Justiereinrichtung 14 mit dem Schlitten 17 der horizontalen Justiereinrichtung 13 verbunden. Um die Führungsplatte 9 und den Hebel 3 an die Körpergröße einer Person anzupassen, müssen lediglich die Befestigungsstifte 18 aus den Befestigungslöchern 16 entnommen und die Schlitten 17 entlang der Schienen 15 an eine geeignete Position verschoben werden. Anschließend werden die Befestigungsstifte 18 wieder durch dazu vorgesehene Durchgangslöcher der Schlitten 17 und in die Befestigungslöcher 16 eingeführt, um so die Schlitten 17 zu fixieren.

Wie des Weiteren der Fig. 1 zu entnehmen ist, wird die Kraftübertragungseinheit 7 durch einen Riemenantrieb 19 gebildet, wobei ein Riemen 20, vorzugsweise ein Zahnriemen, die Drehbewegung des Hebels 3 von einer ersten Rolle (nicht sichtbar), insbesondere ein Zahnriemenrad, auf eine zweite Rolle 22, ebenfalls insbesondere ein Zahnriemenrad, überträgt. Zu diesem Zweck ist die erste Rolle drehfest mit dem Hebel 3 verbunden. Wie insbesondere aus Fig. 4 hervorgeht, ist die zweite Rolle 22 vorzugsweise über einen Riementrieb 23 mit einer Spannvorrichtung 24 mit einem Rollstuhlrad 34 verbunden. Die zweite Rolle 22 kann jedoch auch direkt mit dem Rollstuhlrad 34 verbunden sein. Um die Drehbewegung zu übersetzen, kann, wie in dem gezeigten Ausführungsbeispiel, die zweite Rolle 22 drehfest mit einer Übersetzungsrolle 39 verbunden sein, welche einen anderen Durchmesser aufweist und den Riemen 20 übersetzend mit dem Riementrieb 23 bzw. dem Rollstuhlrad 34 verbindet. In diesem Fall ist der Riementrieb 23 bzw. das Rollstuhlrad 34 mit der Übersetzungsrolle 39 in Kontakt.

Damit der Rollstuhlantrieb 1 möglichst kompakt ausgeführt werden kann, kann der Riemen 20 über Umlenkrollen 26 geführt werden, welche in der gezeigten Ausführungsform an den Schlitten 17 und den Schienen 15 befestigt sind, sodass der Riemen 20 im Wesentlichen entlang der Außenseite des Rollstuhlantriebs 1, insbesondere entlang der Schienen 15, führbar ist.

Um den Rollstuhlantrieb 1 an einem Rollstuhl 2 montieren zu können (vgl. Fig. 4), kann zumindest eine Befestigungsvorrichtung 27 insbesondere zur Befestigung an einer Armlehnenhalterung 28 des Rollstuhls 2 vorgesehen sein. Die Befestigungsvorrichtung 27 weist beispielsweise eine Montagestange zum Einführen in die Armlehnenhalterung 28 auf.

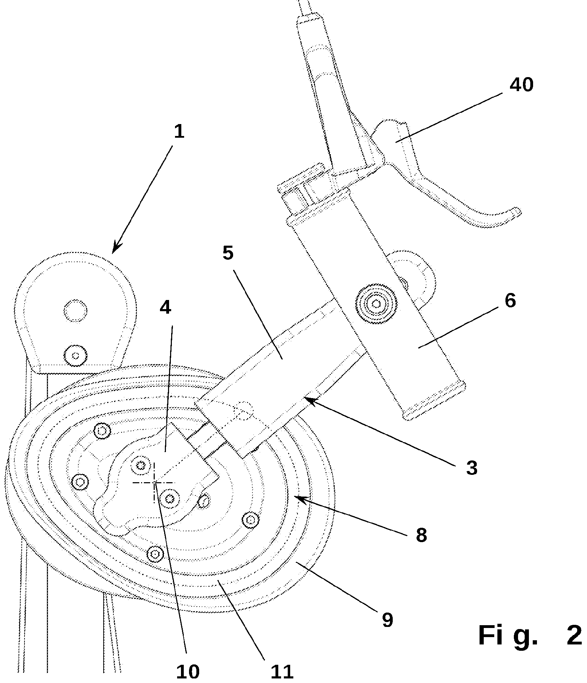

Wie aus Fig. 2 hervorgeht, ist die Führung 8 der Führungsplatte 9 in sich geschlossen und weicht von einer Kreisform ab. Der an dem ausziehbaren Hebelteil 5 befestigte Führungsstift gleitet in der Führung 8 und bewirkt somit während der Drehbewegung die Längenveränderung. Durch die von der Kreisform abweichende Kurvenform werden die Gelenke der antreibenden Person geschont und zugleich die von den Muskeln auf das Rollstuhlrad 34 übertragene Leistung erhöht. Zudem werden die an der Drehbewegung beteiligten Muskeln gleichmäßiger belastet und eine kontinuierliche, d.h. ruckelfreie, Fortbewegung ermöglicht.

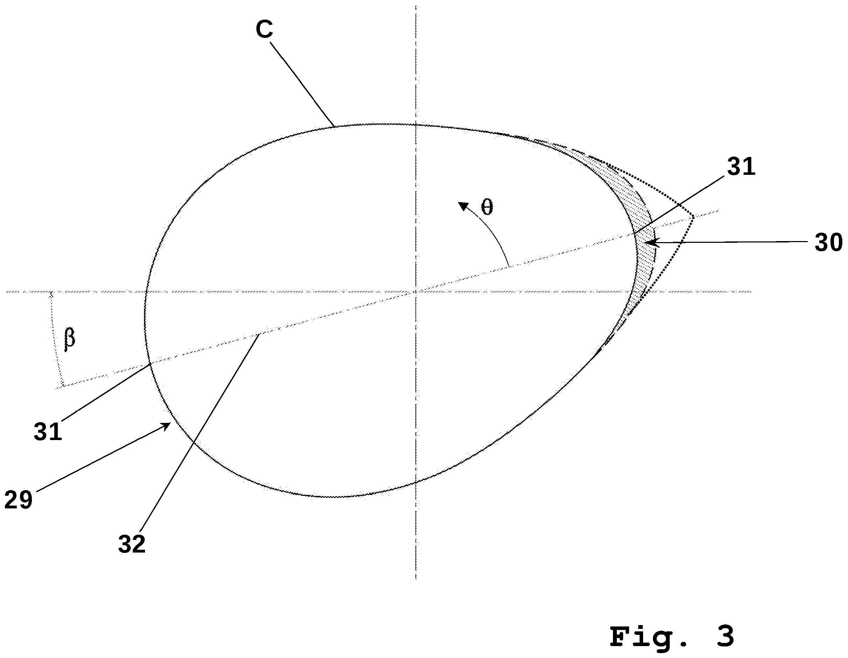

Fig. 3 zeigt eine geschlossene Kurve C in einem kartesischen Koordinatensystem, welche dem Verlauf der Führung 8 in einer besonders bevorzugten Ausführungsform entspricht. Im Ursprung des Koordinatensystems käme der Befestigungspunkt 10 des Hebels 3 zu liegen. Die dargestellte Kurve C ist dabei im Wesentlichen durch folgende Gleichungen beschreibbar:

$$X_1 = A \cos(\theta)$$

$$Y_1 = B \sin(\theta) \sin^n(0{,}5 * \theta)$$

$$\begin{pmatrix} X \\ Y \end{pmatrix} = \begin{pmatrix} \cos(\beta) & -\sin(\beta) \\ \sin(\beta) & \cos(\beta) \end{pmatrix} \begin{pmatrix} X_1 \\ Y_1 \end{pmatrix}$$

, wobei $\theta$ als Laufkoordinate einem Winkel zwischen 0 und 2*pi bzw. 0° und 360° entspricht. Die Koordinaten X und Y beschreiben den Verlauf der Führung 8 in dem kartesischen Koordinatensystem. In der gezeigten Darstellung wurden der Parameter $\beta$ zu 15,95°, der Parameter A zu 0,151 m, der Parameter B zu 0,152 m und der Parameter n zu 0,7 gewählt. Der Verlauf der durch die Gleichungen beschriebene Kurve, welche der punktierten Linie entspricht, kann zur Vermeidung von Unstetigkeiten und zur besseren Führung des Hebels 3 zur durchgezogenen Linie hin abgeflacht sein.

Die dargestellte Kurve C weist im Wesentlichen einen tropfenförmigen Verlauf auf und besitzt einen breiten 29 und einem schmalen Endkurvenbereich 30. Die Endkurvenbereiche 29, 30 weisen jeweils einen Scheitelpunkt 31 auf, welche durch eine Längsachse 32 miteinander verbunden sind. Die Längsachse ist um einen Winkel $\beta$ von vorzugsweise 15° in mathematisch positive Richtung geneigt, sodass der breite Endkurvenbereich 29 nach unten geneigt ist. Im montierten Zustand des Rollstuhlantriebs 1 zeigt der schmale Endkurvenbereich 30 der geschlossenen Kurve C bevorzugt in Richtung einer Rückenlehne 33 des Rollstuhles 2 (vgl. Fig. 4). Dadurch ergibt sich eine besonders gelenkschonende Drehbewegung.

In Fig. 4 sind zwei Rollstuhlantriebe 1 jeweils in Verbindung mit jeweils einem Rollstuhlrad 34 eines Rollstuhls 2 dargestellt. Der Rollstuhl 2 kann, wie aus dem Stand der Technik bekannt, eine Sitzfläche 35, eine Rückenlehne 33 und zwei Fußablagen 36 aufweisen. Durch die Verwendung von zwei Rollstuhlantrieben 1 ist jedes Rollstuhlrad 34 einzeln über jeweils einen Rollstuhlantrieb 1 antreibbar. Wie in Fig. 4 ersichtlich, ist jeder der beiden Rollstuhlantriebe 1 jeweils über die Befestigungsvorrichtungen 27 mit dem Rollstuhl 2 verbunden. Die Drehbewegung eines Hebels 3 wird über einen Riemen 20 , eine erste Rolle und eine zweite Rolle 22 auf ein Rollstuhlrad 34 übertragen. Zu diesem Zweck kann jeweils ein Rollstuhlrad 34 über einen Riementrieb 23 mit Spannvorrichtung 24 mit der zweiten Rolle 22 verbunden sein. Es ist aber auch denkbar, dass die zweite Rolle unmittelbar mit einem Rollstuhlrad 34 verbunden ist. Auch eine Übersetzung mit Hilfe einer mit der zweiten Rolle 22 verbunden Übersetzungsrolle 39 ist möglich.

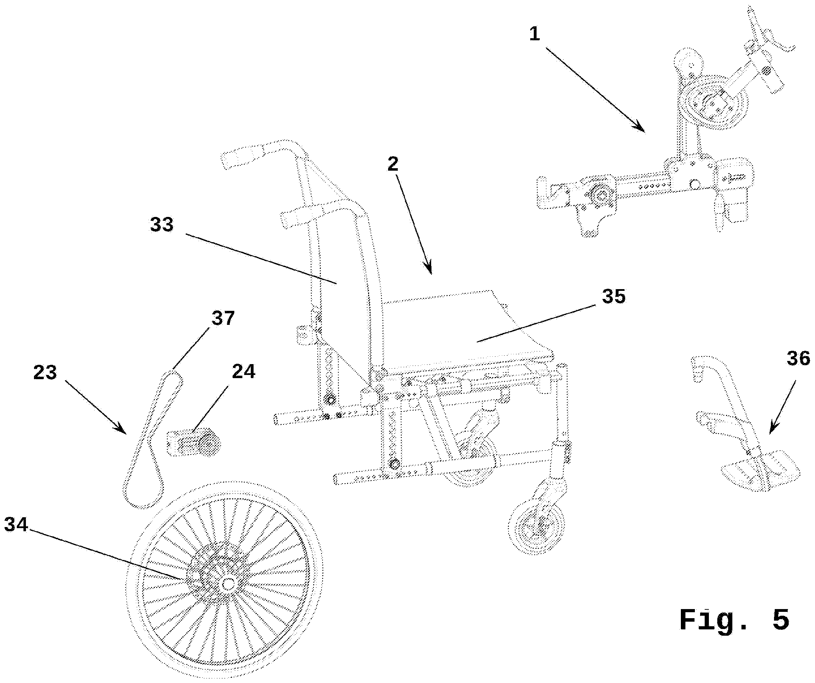

Fig. 5 zeigt den Rollstuhl 2 mit einem Rollstuhlantrieb 1 nochmals in Explosionsdarstellung. In der Darstellung ist ein zweiter Riemen 37 des Riementriebs 23 samt Spannvorrichtung 24 zu erkennen.

## Patentansprüche

1. Mechanischer Rollstuhlantrieb (1) mit einem drehbar gelagerten Hebel (3), einem an dem Hebel (3) befestigten Griff (6) und einer Kraftübertragungseinheit (7) zur Übertragung einer Drehbewegung des Hebels (3) auf ein Rollstuhlrad (34), **dadurch gekennzeichnet, dass** der Hebel (3) längenveränderbar und entlang einer in sich geschlossenen und von der Kreisform abweichenden Führung (8) einer Führungsplatte (9) führbar ist, sodass eine Längenveränderung des Hebels (3) während der Drehbewegung stattfindet.

2. Mechanischer Rollstuhlantrieb (1) nach Anspruch 1, **dadurch gekennzeichnet, dass** der Hebel (3) einen in einem Befestigungspunkt (10) der Führungsplatte (9) drehbar gelagerten Hebelteil (4) und einen entlang der Führung (8) geführten, ausziehbaren Hebelteil (5) aufweist.

3. Mechanischer Rollstuhlantrieb (1) nach Anspruch 1 oder 2, **dadurch gekennzeichnet, dass** eine horizontale Justiereinrichtung (13) zur verstellbaren Befestigung der Führungsplatte (9) und des Hebels (3) entlang einer Horizontalen vorgesehen ist.

4. Mechanischer Rollstuhlantrieb (1) nach einem der Ansprüche 1 bis 3, **dadurch gekennzeichnet, dass** eine vertikale Justiereinrichtung (14) zur verstellbaren Befestigung der Führungsplatte (9) und des Hebels (3) entlang einer Vertikalen vorgesehen ist.

5. Mechanischer Rollstuhlantrieb (1) nach Anspruch 3 oder 4, **dadurch gekennzeichnet, dass** die Justiereinrichtung (13, 14) eine Schiene (15) mit Befestigungslöchern (16) und einen entlang der Schiene gleitenden Schlitten (17) mit einem Fixierstift (18) aufweist, wobei der Fixierstift (18) zur Fixierung des Schlittens (17) in die Befestigungslöcher (16) einführbar ist und die Führungsplatte (9) und der Hebel (3) mittelbar oder unmittelbar mit dem Schlitten (17) verbunden sind.

6. Mechanischer Rollstuhlantrieb (1) nach einem der Ansprüche 1 bis 5, **dadurch gekennzeichnet, dass** die Kraftübertragungseinheit (7) durch einen Riemenantrieb gebildet wird.

7. Mechanischer Rollstuhlantrieb (1) nach Anspruch 6, **dadurch gekennzeichnet, dass** ein Riemen (20) die Drehbewegung des Hebels (3) über eine erste Rolle, insbesondere ein erstes Zahnriemenrad, aufnimmt und an eine zweite Rolle (22), insbesondere ein zweites Zahnriemenrad, zur Übertragung der Drehbewegung an ein Rollstuhlrad (34) abgibt, wobei vorzugsweise Umlenkrollen (26) vorgesehen sind, sodass der Riemen (20) im Wesentlichen entlang einer Außenseite des Rollstuhlantriebs, insbesondere entlang der Schienen (15), führbar ist.

8. Mechanischer Rollstuhlantrieb nach einem der Ansprüche 1 bis 7, **dadurch gekennzeichnet, dass** die Kraftübertragungseinheit (7) einen vorzugsweise deaktivierbaren Freilaufmechanismus zur Übertragung der Drehbewegung des Hebels (3) in nur eine Drehrichtung aufweist.

9. Mechanischer Rollstuhlantrieb (1) nach einem der Ansprüche 1 bis 8, **dadurch gekennzeichnet, dass** an dem Griff (6) ein Betätigungshebel (40) für eine Bremsvorrichtung (41) des Rollstuhlrades (34) vorgesehen ist.

10. Mechanischer Rollstuhlantrieb (1) nach einem der Ansprüche 1 bis 9, **dadurch gekennzeichnet, dass** zumindest eine Befestigungsvorrichtung (27) zur Befestigung an einem Rollstuhl (2), insbesondere an einer Armlehnenhalterung (28) eines Rollstuhls, vorgesehen ist.

11. Mechanischer Rollstuhlantrieb (1) nach einem der Ansprüche 1 bis 10, **dadurch gekennzeichnet, dass** die Führung (8) einer im Wesentlichen tropfenförmigen geschlossenen Kurve (C) mit einem breiten (29) und einem schmalen Endkurvenbereich (30) entspricht, wobei die Endkurvenbereiche (29, 30) jeweils einen Scheitelpunkt (31) aufweisen und der schmale Endkurvenbereich (30) der geschlossenen Kurve (C) im montierten Zustand des Rollstuhlantriebs (1) in Richtung einer Rückenlehne (33) des Rollstuhles (2) zeigt.

12. Mechanischer Rollstuhlantrieb (1) nach Anspruch 11, **dadurch gekennzeichnet, dass** im montierten Zustand des Rollstuhlantriebs (1) eine zwischen den Scheitelpunkten (31) des breiten (29) und des schmalen Endkurvenbereichs (30) verlaufende Längsachse (32) zumindest 5°, bevorzugt zumindest 10°, vorzugsweise im Wesentlichen 15°, aber nicht mehr als 30°, zur Horizontalen, insbesondere mit dem breiten Endkurvenbereich nach unten, geneigt ist.

13. Mechanischer Rollstuhlantrieb (1) nach Anspruch 12, **dadurch gekennzeichnet, dass** die Kurve (C) im Wesentlichen durch folgende mathematische Gleichungen beschreibbar ist:

$$X_1 = A\cos(\theta)$$

$$Y_1 = B\sin(\theta)\sin^n(0{,}5 * \theta)$$

$$\begin{pmatrix} X \\ Y \end{pmatrix} = \begin{pmatrix} \cos(\beta) & -\sin(\beta) \\ \sin(\beta) & \cos(\beta) \end{pmatrix} \begin{pmatrix} X_1 \\ Y_1 \end{pmatrix}$$

, wobei θ einem Winkel entspricht, die Koordinaten X und Y den Verlauf der Führung in einem kartesischen Koordinatensystem beschreiben, der Parameter β zwischen -20° und 30°, die Parameter A und B zwischen 0,01 m und 0,25 m und der Parameter n zwischen 0,2 und 0,9 festgelegt werden.

14. Rollstuhl (2) mit einer Sitzfläche (35), einer Rückenlehne (33) und zumindest zwei Rollstuhlrädern (34), **dadurch gekennzeichnet, dass** ein mechanischer Rollstuhlantrieb (1) vorgesehen ist, der mit zumindest einem Rollstuhlrad (34) verbunden ist und der Rollstuhlantrieb (1) nach einem der Ansprüche 1 bis 13 ausgebildet ist.

15. Rollstuhl (2) nach Anspruch 14, **dadurch gekennzeichnet, dass** an dem Rollstuhl zwei Rollstuhlräder (34) vorgesehen sind, die mit jeweils einem Rollstuhlantrieb (1) verbunden sind.

**Claims**

1. Mechanical wheelchair drive (1) comprising a rotatably mounted lever (3), a handle (6) fastened to the lever (3) and a force transfer unit (7) for transferring a rotational motion of the lever (3) to a wheelchair wheel (34), **characterized in that** the lever (3) has a variable length and can be guided along a closed guide (8) of a guide plate (9), which guide (8) deviates from the circular form, so that a length variation of the lever (3) takes place during the rotational motion.

2. Mechanical wheelchair drive (1) according to Claim 1, **characterized in that** the lever (3) has a lever part (4) mounted rotatably at a fastening point (10) of the guide plate (9) and an extendable lever part (5) guided along the guide (8).

3. Mechanical wheelchair drive (1) according to Claim 1 or 2, **characterized in that** a horizontal adjusting device (13) is provided for the adjustable fastening of the guide plate (9) and the lever (3) along a horizontal.

4. Mechanical wheelchair drive (1) according to one of Claims 1 to 3, **characterized in that** a vertical adjusting device (14) is provided for the adjustable fastening of the guide plate (9) and the lever (3) along a vertical.

5. Mechanical wheelchair drive (1) according to Claim 3 or 4, **characterized in that** the adjusting device (13, 14) comprises a rail (15) with fastening holes (16) and a carriage (17) with a fixing pin (18), which carriage (17) slides along the rail, wherein the fixing pin (18) can be introduced into the fastening holes (16) for fixing the carriage (17) and wherein the guide plate (9) and the lever (3) are connected indirectly or directly to the carriage (17).

6. Mechanical wheelchair drive (1) according to one of Claims 1 to 5, **characterized in that** the force transfer unit (7) is formed by a belt drive.

7. Mechanical wheelchair drive (1) according to Claim 6, **characterized in that** a belt (20) receives the rotational motion of the lever (3) via a first roller, in particular a first toothed belt wheel, and delivers it to a second roller (22), in particular a second toothed belt wheel, for transfer of the rotational motion to a wheelchair wheel (34), wherein preferably deflecting rollers (26) are provided so that the belt (20) can be guided substantially along an outer side of the wheelchair drive, in particular along the rails (15) .

8. Mechanical wheelchair drive according to one of Claims 1 to 7, **characterized in that** the force transfer unit (7) comprises a preferably de-activatable freewheeling mechanism for transferring the rotational motion of the lever (3) in only one direction of rotation.

9. Mechanical wheelchair drive (1) according to one of Claims 1 to 8, **characterized in that** an actuating lever (40) for a braking device (41) of the wheelchair drive (34) is provided on the handle (6) .

10. Mechanical wheelchair drive (1) according to one of Claims 1 to 9, **characterized in that** at least one fastening device (27) is provided for fastening on a wheelchair (2), in particular on an armrest holder (28) of a wheelchair.

11. Mechanical wheelchair drive (1) according to one of Claims 1 to 10, **characterized in that** the guide (8) corresponds to a substantially droplet-shaped closed curve (C) having a wide (29) and a narrow end curve region (30), wherein the end curve regions (29, 30) each have a vertex point (31) and the narrow end curve region (30) of the closed curve (C) in the mounted state of the wheelchair drive (1) points in the direction of a backrest (33) of the wheelchair (2).

**12.** Mechanical wheelchair drive (1) according to Claim 11, **characterized in that** in the mounted state of the wheelchair drive (1) a longitudinal axis (32) running between the vertex points (31) of the wide (29) and the narrow end curve region (30) is inclined by at least 5°, preferably at least 10°, preferably substantially 15° but no more than 30° with respect to the horizontal, in particular with the wide end curve region downwards.

**13.** Mechanical wheelchair drive (1) according to Claim 12, **characterized in that** the curve (C) can be described substantially by the following mathematical equations:

$$X_1 = A \cos(\theta)$$

$$Y_1 = B \sin(\theta) \sin^n(0{,}5 * \theta)$$

$$\begin{pmatrix} X \\ Y \end{pmatrix} = \begin{pmatrix} \cos(\beta) & -\sin(\beta) \\ \sin(\beta) & \cos(\beta) \end{pmatrix} \begin{pmatrix} X_1 \\ Y_1 \end{pmatrix}$$

wherein $\theta$ corresponds to an angle, the coordinates X and Y describe the course of the guide in a Cartesian coordinate system, the parameter $\beta$ is specified between -20° and 30°, the parameters A and B are specified between 0.01 m and 0.25 m and the parameter n is specified between 0.2 and 0.9.

**14.** Wheelchair (2) having a seat surface (35), a backrest (33) and at least two wheelchair wheels (34), **characterized in that** a mechanical wheelchair drive (1) is provided, which is connected to at least one wheelchair wheel (34) and the wheelchair drive (1) is configured according to one of Claims 1 to 13.

**15.** Wheelchair (2) according to Claim 14, **characterized in that** two wheelchair wheels (34) are provided on the wheelchair which are each connected to a wheelchair drive (1).

**Revendications**

**1.** Entraînement mécanique de fauteuil roulant (1) comprenant un levier (3) rotatif, une poignée (6) fixée au levier (3) et une unité de transmission de force (7) destinée à transmettre un mouvement de rotation du levier (3) à une roue de fauteuil roulant (34), **caractérisé en ce que** le levier (3) est réglable en longueur et peut être guidé le long d'un guide (8) fermé sur luimême et de forme non circulaire d'une plaque de guidage (9), de sorte que la longueur du levier (3) varie au cours du mouvement de rotation.

**2.** Entraînement mécanique de fauteuil roulant (1) selon la revendication 1, **caractérisé en ce que** le levier (3) présente une partie de levier (4) logée de manière rotative en un point de fixation (10) de la plaque de guidage (9) et une partie de levier (5) extensible guidée le long du guide (8).

**3.** Entraînement mécanique de fauteuil roulant (1) selon la revendication 1 ou 2, **caractérisé en ce qu'**un dispositif d'ajustement horizontal (13) est prévu pour fixer de manière réglable la plaque de guidage (9) et le levier (3) le long d'un axe horizontal.

**4.** Entraînement mécanique de fauteuil roulant (1) selon l'une des revendications 1 à 3, **caractérisé en ce qu'**un dispositif d'ajustement vertical (14) est prévu pour fixer de manière réglable la plaque de guidage (9) et le levier (3) le long d'un axe vertical.

**5.** Entraînement mécanique de fauteuil roulant (1) selon la revendication 3 ou 4, **caractérisé en ce que** le dispositif d'ajustement (13, 14) présente un rail (15) pourvu de trous de fixation (16) et un chariot (17) coulissant le long du rail et pourvu d'une broche de fixation (18), dans lequel la broche de fixation (18) peut être introduite dans les trous de fixation (16) pour fixer le chariot (17), et la plaque de guidage (9) et le levier (3) sont reliés directement ou indirectement au chariot (17).

**6.** Entraînement mécanique de fauteuil roulant (1) selon l'une des revendications 1 à 5, **caractérisé en ce que** l'unité de transmission de force (7) est formée d'une courroie d'entraînement.

**7.** Entraînement mécanique de fauteuil roulant (1) selon la revendication 6, **caractérisé en ce qu'**une courroie (20) reçoit le mouvement de rotation du levier (3) par l'intermédiaire d'une première poulie, en particulier une première poulie crantée, et le transmet à une deuxième poulie (22), en particulier une deuxième poulie crantée, pour transmettre le mouvement de rotation à une roue de fauteuil roulant (34), dans lequel il est de préférence prévu des poulies de renvoi (26), de sorte que la courroie (20) peut être guidée essentiellement le long d'un côté extérieur de l'entraînement de fauteuil roulant, en particulier le long des rails (15).

**8.** Entraînement mécanique de fauteuil roulant selon l'une des revendications 1 à 7, **caractérisé en ce que** l'unité de transmission de force (7) présente un mécanisme à roue libre, de préférence désactivable, destiné à transmettre le mouvement de rotation du levier (3) dans un seul sens de rotation.

**9.** Entraînement mécanique de fauteuil roulant (1) selon l'une des revendications 1 à 8, **caractérisé en**

**ce qu'**un levier de commande (40) d'un dispositif de freinage (41) de la roue de fauteuil roulant (34) est prévu sur la poignée (6).

10. Entraînement mécanique pour fauteuil roulant (1) selon l'une des revendications 1 à 9, **caractérisé en ce qu'**il est prévu au moins un dispositif de fixation (27) pour la fixation à un fauteuil roulant (2), en particulier à un support d'accoudoir (28) d'un fauteuil roulant.

11. Entraînement mécanique de fauteuil roulant (1) selon l'une des revendications 1 à 10, **caractérisé en ce que** le guide (8) correspond à une courbe fermée (C) sensiblement en forme de goutte présentant une zone de courbe d'extrémité large (29) et une zone de courbe d'extrémité étroite (30), dans lequel les zones de courbe d'extrémité (29, 30) présentent chacune un sommet (31) et la zone de courbe d'extrémité étroite (30) de la courbe fermée (C) est dirigée vers un dossier (33) du fauteuil roulant (2) lorsque l'entraînement de fauteuil roulant (1) est monté.

12. Entraînement mécanique de fauteuil roulant (1) selon la revendication 11, **caractérisé en ce que**, lorsque l'entraînement de fauteuil roulant (1) est monté, un axe longitudinal (32) s'étendant entre les sommets (31) de la zone de courbe d'extrémité large (29) et de la zone de courbe d'extrémité étroite (30) est incliné d'au moins 5°, préférablement d'au moins 10°, de préférence essentiellement de 15°, mais pas de plus de 30°, par rapport à l'horizontale, en particulier avec la zone de courbe d'extrémité large vers le bas.

13. Entraînement mécanique de fauteuil roulant (1) selon la revendication 12, **caractérisé en ce que** la courbe (C) peut être décrite essentiellement par les équations mathématiques suivantes :

$$X_1 = A \cos(\theta)$$

$$Y_1 = B \sin(\theta) \sin^n(0{,}5 * \theta)$$

$$\begin{pmatrix} X \\ Y \end{pmatrix} = \begin{pmatrix} \cos(\beta) & -\sin(\beta) \\ \sin(\beta) & \cos(\beta) \end{pmatrix} \begin{pmatrix} X_1 \\ Y_1 \end{pmatrix}$$

, où $\theta$ correspond à un angle, les coordonnées X et Y décrivent le parcours du guide dans un système de coordonnées cartésiennes, le paramètre $\beta$ est fixé entre -20° et 30°, les paramètres A et B entre 0,01 m et 0,25 m et le paramètre n entre 0,2 et 0,9.

14. Fauteuil roulant (2) comprenant une assise (35), un dossier (33) et au moins deux roues de fauteuil roulant (34), **caractérisé en ce qu'**il est prévu un entraînement mécanique de fauteuil roulant (1) qui est relié à au moins une roue de fauteuil roulant (34) et **en ce que** l'entraînement de fauteuil roulant (1) est conçu selon l'une des revendications 1 à 13.

15. Fauteuil roulant (2) selon la revendication 14, **caractérisé en ce que** deux roues de fauteuil roulant (34) sont prévues sur le fauteuil roulant, lesquelles sont reliées chacune à un entraînement de fauteuil roulant (1).

Fig. 1

Fig. 2

Fig. 3

Fig. 4

Fig. 5

**IN DER BESCHREIBUNG AUFGEFÜHRTE DOKUMENTE**

**In der Beschreibung aufgeführte Patentdokumente**

- DE 3413312 A1
- US 4758013 A
- US 6910701 B1
- WO 2004110329 A1
- US 5037120 A
- WO 2014199110 A1
- DE 8803670 U1